# EUROPÄISCHE PATENTSCHRIFT

(11) **EP 1 452 778 B1**
(45) Veröffentlichungstag und Bekanntmachung des Hinweises auf die Patenterteilung: **05.03.2008**
(21) Anmeldenummer: 04002273.3
(22) Anmeldetag: 31.01.2004
(51) Int. Cl.: F16H 61/00, F16H 57/04

(54) **Automatisiertes Getriebe für Kraftfahrzeuge**
Automated gearbox for motor vehicles
Boîte de vitesses automatisée pour véhicules automobiles

(30) Priorität: 27.02.2003 DE 10308560
(43) Veröffentlichungstag der Anmeldung: 01.09.2004
(73) Patentinhaber: GETRAG Getriebe- und Zahnradfabrik Hermann Hagenmeyer GmbH & Cie KG, 74199 Untergruppenbach (DE)
(72) Erfinder: Rühle, Günter, 74369 Löchgau (DE); Diel, Henning, 71636 Ludwigsburg (DE); Harst, Richard, 74078 Heilbronn (DE); Seufert, Martin, 71711 Steinheim (DE)
(74) Vertreter: Steil, Christian

(56) Entgegenhaltungen:
- DE-A1- 4 020 161
- FR-A- 2 798 179
- US-A- 3 800 913
- US-A- 4 721 185
- US-A- 5 669 479
- US-A1- 2002 032 093
- US-A1- 2002 053 489
- PATENT ABSTRACTS OF JAPAN Bd. 2000, Nr. 21, 3. August 2001 (2001-08-03) & JP 2001 099281 A (AISIN SEIKI CO LTD), 10. April 2001 (2001-04-10)

## Beschreibung

Die vorliegende Erfindung betrifft ein automatisiertes Getriebe für Kraftfahrzeuge, insbesondere in Form eines Vorgelegegetriebes, mit
- einem Getriebegehäuse,
- wenigstens einem Kraftübertragungsstrang zum Einrichten unterschiedlicher Übersetzungsverhältnisse, der dazu ausgelegt ist, Kraft von einem Getriebeeingang zu einem Getriebeausgang zu übertragen, wobei Kraftübertragungsglieder aus einem Ölsumpf am Boden des Getriebegehäuses geschmiert werden, und
- einer Hydraulikanordnung, die wenigstens eine Pumpe und eine Ventilanordnung aufweist und dazu ausgelegt ist, Schaltglieder zum Ändern des Übersetzungsverhältnisses des Kraftübertragungsstrangs automatisiert zu betätigen, wobei innerhalb des Getriebegehäuses seitlich neben dem Ölsumpf ein Behälter angeordnet ist, der als ein Ölreservoir für die Hydraulikanordnung dient, und wobei der Behälter durch das Getriebegehäuse und durch eine von außen an dem Getriebegehäuse angebrachte Abdeckung gebildet ist.

Ein solches Getriebe ist aus der US-A-5,669,479 bekannt.

Ein weiteres automatisiertes Getriebe in Form eines automatisierten Schaltgetriebes für Kraftfahrzeuge ist aus der DE 196 27 974 A1 bekannt.

Ferner ist ein Getriebe in Form eines Wandlerautomaten aus der DE 41 08 657 A1 bekannt.

Auf dem Gebiet der automatisierten bzw. automatischen Getriebe für Kraftfahrzeuge sind neben den klassischen Wandlerautomaten auch automatisierte Schaltgetriebe, Doppelkupplungsgetriebe sowie stufenlose Getriebe bekannt. Automatisierte Schaltgetriebe entsprechen hinsichtlich der Ausgestaltung ihres Kraftübertragungsstrangs im Wesentlichen herkömmlichen manuellen Schaltgetrieben. Schalt- und Wählbewegungen können jedoch automatisiert durchgeführt werden. Doppelkupplungsgetriebe enthalten im Grunde zwei parallele Kraftübertragungsstränge, die überschneidend in den Kraftfluss geschaltet werden. Bei den stufenlosen, auf Reibung basierenden Getrieben kennt man Umschlingungsgetriebe (CVT) und Reibradgetriebe.

Während es auch bekannt ist, die automatische Betätigung auf der Grundlage von Elektromotoren durchzuführen, so befasst sich die vorliegende Erfindung mit hydraulisch bzw. elektrohydraulisch betätigten automatisierten Getrieben.

Hinsichtlich der Ölansaugung für die Hydraulikanordnung unterscheidet man dabei zwischen der Ansaugung aus dem Ölsumpf im Getriebegehäuse und der Ansaugung aus einem Behälter außerhalb des Getriebes.

Bei der Ansaugung aus dem Ölsumpf (wie es bei Wandlerautomaten erfolgt) befindet sich die komplette Hydraulikanordnung einschließlich Pumpe, Ventile, Druckspeicher etc. innerhalb des Getriebegehäuses. Die Pumpe wird mechanisch über die Getriebeeingangswelle angetrieben. Das Getriebegehäuse weist im unteren Bereich eine Ölwanne auf, in der sich Hydraulikkomponenten befinden. Ferner ist die Ölwanne so ausgebildet, dass sie als Ölreservoir zum Ansaugen des Öls geeignet ist.

Auf dem Gebiet der Wandlerautomaten ist es aus der eingangs genannten DE 41 08 657 A1 bekannt, in der Ölwanne am Boden des Getriebegehäuses einen geschlossenen Behälter anzuordnen, der durch die Anordnung einer Luftleitung und einer Tauschöffnung ermöglicht, den Ölspiegel zu regeln.

Bei dem Wandlerautomatengetriebe wird das Öl sowohl zur Schmierung und Kühlung des Kraftübertragungsstrangs als auch zum Betrieb der Hydraulikanordnung verwendet (ATF).

Bei dieser Ausführungsform sitzt das Ölreservoir somit an der tiefsten Stelle des Getriebes, unterhalb des Kraftübertragungsstrangs bzw. der Radsätze. Es wird ein vergleichsweise großer Bauraum benötigt, um einen beruhigten Ölraum zu schaffen. Dies kostet insbesondere Bauraum in einem kritischen Bereich, der die Bodenfreiheit des Fahrzeugs betrifft.

Zudem muss das Ölreservoir so gestaltet sein, dass unter Längs- und Querbeschleunigungen, Bergauf- und Bergabfahrt ein sicheres Ansaugen aus dem Ölreservoir in die Hydraulikanordnung und ein sicheres Zurückfließen in das Ölreservoir gewährleistet sind. Auch hierzu muss der Bauraum entsprechend ausgelegt sein.

Bei Getrieben in Vorgelegebauweise ist ein solcher Bauraum für ein geeignetes Ölreservoir auf der Unterseite nicht verfügbar.

Auf dem Gebiet der automatisierten Schaltgetriebe ist es bekannt, die Hydraulikanordnung als eine Einheit mit Elektromotor zum Antreiben der Pumpe, der Pumpe selbst, einem Vorratsbehälter, Ventilen und einem Druckspeicher im Motorraum anzuordnen.

Die Hydraulikeinheit im Motorraum muss dann mit dem Getriebe über Hydraulikleitungen verbunden werden. Dies führt zu einer aufwändigen Montage im Fahrzeug, da Getriebe und Hydraulikeinheit getrennt verbaut werden müssen. Es ergeben sich erhöhte Anforderungen hinsichtlich Sauberkeit, Dichtigkeit der Hydraulikleitungen und -elemente, sowie eine aufwändige Entlüftung des Systems.

Ferner sind für das Getriebe und die Hydraulikeinheit getrennte Hydraulikmedien bereitzustellen. Der Aufwand des Kontrollierens des Ölstandes und des Nachfüllens in getrennte Behälter (Vorratsbehälter im Motorraum einerseits und Getriebegehäuse andererseits) ist aufwändig.

Ferner ist es auf dem Gebiet der automatisierten Schaltgetriebe bekannt, die Hydraulikeinheit einschließlich Elektromotor, Pumpe, Vorratsbehälter, Ventile, Druckspeicher etc. außen am Getriebegehäuse anzubauen.

Die an das Getriebegehäuse zu montierenden Hydraulikelemente müssen über eine Vielzahl von Hydraulikleitungen und Hydraulikschläuchen außerhalb des Getriebes verbunden werden. Es ergibt sich die Gefahr von Beschädigungen und Leckage. Ebenfalls ergeben sich erhöhte Anforderungen hinsichtlich der Dichtigkeit.

Die Montage der einzelnen Hydraulikkomponenten an dem Getriebegehäuse ist aufwändig.

Auch bei diesem Stand der Technik können für das Getriebe einerseits und die Hydraulikeinheit andererseits getrennte Hydraulikmedien vorgesehen werden.

Vor dem obigen Hintergrund besteht das der Erfindung zu Grunde liegende Problem darin, ein automatisiertes Getriebe für Kraftfahrzeuge zu schaffen, das einfach zu montieren ist und gegenüber dem Stand der Technik keine Einschränkungen der Bodenfreiheit erfordert.

Diese Aufgabe wird bei dem eingangs genannten automatisierten Getriebe für Kraftfahrzeuge dadurch gelöst, dass der Behälter nach oben hin geöffnet und über die obere Öffnung mit Spritzöl füllbar ist, wobei das Getriebegehäuse eine neben dem Ölsumpf angeordnete, hochstehende Trennwand aufweist, hinter der an dem Getriebegehäuse eine Öffnung ausgebildet ist, die von der Abdeckung verschlossen ist.

Durch die Anordnung eines Behälters innerhalb des Getriebegehäuses wird vermieden, einen Vorratsbehälter außerhalb des Getriebes (im Motorraum oder außen an dem Getriebegehäuse) vorsehen zu müssen. Demzufolge ergibt sich eine einfachere Montierbarkeit des Getriebes.

Ferner ist der als Ölreservoir ausgebildete Behälter neben dem Ölsumpf angeordnet, so dass keine Einschränkung der Bodenfreiheit notwendig ist. Die Anordnung seitlich neben dem Ölsumpf beinhaltet eine Anordnung seitlich von einer Längsachse des Fahrzeugs oder auch seitlich von einer Querachse (also in Längsrichtung des Fahrzeugs vorne bzw. hinten, beispielsweise bei Front-Quereinbau).

Erfindungsgemäß ist ein einheitliches Hydraulikmedium für das Schmieren/Kühlen des Kraftübertragungsstrangs und für die Hydraulikanordnung vorgesehen. Aufwändige Kontroll- und Füllvorgänge entfallen folglich. Es muss nur ein Ölstand überwacht werden.

Ferner ist durch die Öffnung des Behälters nach oben hin gewährleistet, dass der Behälter durch Spritzöl befüllt wird. Demzufolge kann vermieden werden, dass das Ölreservoir mit der Zeit leer wird.

Der Behälter ist seitlich neben dem Ölsumpf angeordnet und nach oben hin offen. Durch geeignete Ausgestaltung der Abgrenzung zwischen Ölsumpf und Behälter kann auf einfache Weise gewährleistet werden, dass sich das Ölreservoir auch unter starken Längs- und Querbeschleunigungen, bei Bergauf- oder Bergabfahrt nicht leert und immer ein sicheres Ansaugen aus dem Ölreservoir gewährleistet ist. Insbesondere kann der Behälter sehr hoch ausgebildet werden.

Durch die nach oben hin offene Anordnung ergibt sich ferner eine einfachere Konstruktion des Behälters.

Auch ergibt sich durch Verwendung der Abdeckung eine im Vergleich zu einer vollintegrierten Lösung vereinfachte Konstruktion des Getriebegehäuses.

Die Abdeckung kann noch weitere Funktionen besitzen, so dass sich insgesamt kein erhöhter Montageaufwand ergibt.

Ferner wird ein Teil der Behälterwand durch das Getriebegehäuse selbst gebildet, ein anderer Teil durch die Abdeckung.

Es ist von Vorteil, wenn die Abdeckung Teil eines Hydraulikgehäuses ist, in dem die Hydraulikanordnung angeordnet ist, und das von außen an dem Getriebegehäuse festgelegt ist.

Durch diese Maßnahme erfüllt die Abdeckung nicht nur die Funktion des Bildens einer Behälterwand sondern auch die Funktion als Träger für die Hydraulikanordnung bzw. für zumindest einen Teil der Hydraulikanordnung.

Insgesamt ist es von besonderem Vorteil, wenn die Hydraulikanordnung außerhalb des Getriebegehäuses angeordnet ist und Öl der Hydraulikanordnung aus dem Behälter über eine Versorgungsöffnung zuführbar ist.

Im Gegensatz zu Wandlerautomaten bietet das Anordnen der Hydraulik außerhalb des Getriebegehäuses bei automatisierten Vorgelegegetrieben den Vorteil, dass auch eine "add-on"-Lösung möglich ist. Demzufolge kann das Getriebegehäuse sowohl für herkömmliche Handschaltgetriebe als auch für eine automatisierte Version dieses Handschaltgetriebes verwendet werden.

Dabei ist es von besonderem Vorzug, wenn die Hydraulikanordnung in einem Hydraulikgehäuse angeordnet ist, das von außen an dem Getriebegehäuse festgelegt ist.

Hierdurch ergibt sich eine leichtere Montierbarkeit der Hydraulikanordnung (beispielsweise als vormontierte Einheit innerhalb des Hydraulikgehäuses). Ferner kann das Hydraulikgehäuse als Abdeckung für eine Öffnung des Getriebegehäuses verwendet werden, so dass die Versorgungsöffnung in das Hydraulikgehäuse integriert werden kann.

Bei dieser Ausführungsform ist es ferner von Vorteil, wenn ein Elektromotor zum Antreiben der Pumpe der Hydraulikanordnung außen an dem Hydraulikgehäuse festgelegt ist.

Hierdurch wird der Montageaufwand weiter verringert, da auch der Elektromotor vormontiert an dem Hydraulikgehäuse bereitgestellt werden kann.

Gemäß einer weiteren bevorzugten Ausführungsform wird Öl von der Hydraulikanordnung außerhalb des Getriebegehäuses über wenigstens eine Rückführöffnung zurück in das Getriebegehäuse geführt.

Sofern das Hydraulikgehäuse als Abdeckung für eine Öffnung des Getriebegehäuses ausgelegt ist, kann auch die Rückführöffnung in das Hydraulikgehäuse integriert sein.

Bei dieser Ausführungsform ist es ferner von besonderem Vorteil, wenn die Rückführöffnung so angeordnet ist, dass das in das Getriebegehäuse zurückgeführte Öl in den Behälter gefüllt wird.

Bei dieser Ausführungsform ergibt sich folglich ein im Wesentlichen geschlossener Kreislauf von dem Behälter über die Hydraulikanordnung zurück in den Behälter.

Sofern der Behälter nach oben offen ausgebildet ist, kann das rückgeführte Öl von oben in den Behälter eingefüllt werden.

Insgesamt ist es vorteilhaft, wenn der Behälter eine Überlauföffnung aufweist, die auf der Höhe des maximalen Füllpegels des Behälters liegt und über die überlaufendes Öl dem Ölsumpf zugeführt wird.

Hierdurch wird eine Überfüllung des Behälters zu Lasten des Ölsumpfes vermieden. Die Überlauföffnung kann beispielsweise durch die obere Öffnung des Behälters gebildet sein, oder durch eine seitliche Öffnung in einer Trennwand des Behälters hin zu dem Ölsumpf. Letztere Ausführungsform ist bevorzugt, da der maximale Füllpegel dann unterhalb der oberen Behälteröffnung liegt und insofern auch bei Beschleunigungsvorgängen und Bergfahrten verhindert werden kann, dass Öl aus dem Behälter schwappt.

Gemäß einer weiteren insgesamt bevorzugten Ausführungsform weist die Hydraulikanordnung wenigstens ein Stellglied auf, das innerhalb des Getriebegehäuses angeordnet ist.

Ein derartiges Stellglied zum Betätigen von Schaltgliedern des Kraftübertragungsstrangs (wie z.B. Schaltmuffen) ist im Stand der Technik (z.B. DE 196 15 267 C1) außerhalb des Getriebegehäuses angeordnet. Hierbei ergeben sich jedoch erhöhte Dichtigkeitsanforderungen.

Sofern das Stellglied innerhalb des Getriebegehäuses angeordnet ist und für die Schmierung des Kraftübertragungsstrangs und die Betätigung der Hydraulikanordnung ein einheitliches Hydraulikmedium verwendet wird, können Stellglieder mit geringeren Dichtigkeitsanforderungen vorgesehen werden. Dies führt zu geringeren Kosten der Hydraulikanordnung.

Dabei ist es von besonderem Vorteil, wenn das Stellglied an einem zum Getriebegehäuse weisenden Teil des Hydraulikgehäuses festgelegt ist.

Hierdurch wird ferner erreicht, dass die Hydraulikanordnung einschließlich des Stellgliedes bzw. der Stellglieder vormontiert werden kann und anschließend auf einfache Weise von außen an dem Getriebegehäuse festgelegt werden kann.

Insgesamt wird somit ein verbessertes automatisiertes Getriebe geschaffen. Obgleich einige Merkmale insbesondere bei automatisierten Getrieben in Vorgelegebauweise zur Geltung kommen, versteht sich, dass die vorliegende Erfindung in gleicher Weise auch auf Wandlerautomaten sowie stufenlose Getriebe anwendbar ist.

Der Begriff "automatisiert" soll im vorliegenden Zusammenhang sowohl "automatisiert" als auch "automatisch" beinhalten.

Der Begriff "Öl" wird vorliegend äquivalent zu dem allgemeinen Gattungsbegriff "Hydraulikmedium" verwendet.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Querschnittsansicht durch ein automatisiertes Kraftfahrzeuggetriebe gemäß einer ersten Ausführungsform;
- Fig. 2: eine Darstellung eines Details einer erfindungsgemäß abgewandelten Ausführungsform des automatisierten Getriebes der Fig. 1;
- Fig. 3: eine Darstellung einer weiteren Abwandlung des automatisierten Getriebes der Fig. 1, und zwar mit einem separaten Ölreservoir-Behälter;
- Fig. 4: eine schematische Querschnittsansicht durch eine weitere Ausführungsform des erfindungsgemäßen automatisierten Getriebes; und
- Fig. 5: eine Schnittansicht entlang der Linie V-V von Fig. 4.

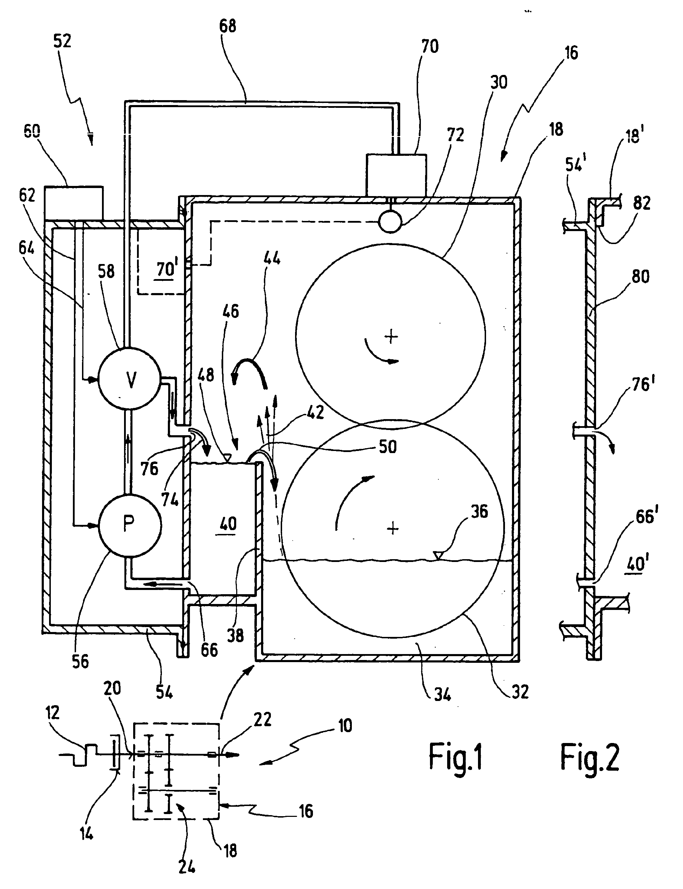

In Fig. 1 ist in schematischer Form ein Antriebsstrang eines Kraftfahrzeuges generell mit 10 bezeichnet.

Der Antriebsstrang 10 weist einen Verbrennungsmotor 12, eine Anfahr- und Trennkupplung 14 sowie ein Getriebe 16 in Vorgelegebauweise auf.

Das Getriebe 16 weist ein Getriebegehäuse 18 auf.

In dem Getriebegehäuse 18 ist ein Kraftübertragungszweig bzw. - strang 24 in Form eines Vorgelegegetriebes angeordnet. Der Kraftübertragungsstrang 24 dient dazu, Kraft von einem Getriebeeingang 20 zu einem Getriebeausgang 22 und damit zu Antriebsrädern des Kraftfahrzeuges zu übertragen.

Fig. 1 zeigt ferner in einer schematischen Querschnittsansicht eine erste Ausführungsform des automatisierten Getriebes 16. In schematischer Form ist innerhalb des Getriebegehäuses 18 ein Radsatz des Kraftübertragungsstranges 24 gezeigt. Der Radsatz weist zwei miteinander kämmende Zahnräder 30, 32 auf.

Die Zahnräder 30, 32 sind generell übereinander angeordnet. Das untere Zahnrad 32 taucht in einen Ölsumpf 34 am Boden des Getriebegehäuses 18 ein. Der Ruhe-Ölsumpfpegel ist bei 36 gezeigt.

Im Betrieb nimmt das untere Zahnrad 32 Öl aus dem Ölsumpf 34 nach oben mit und schmiert hierdurch nicht nur die eigenen Zahnflanken sondern erzeugt Spritzöl 42, das auch andere zu schmierende Glieder des Kraftübertragungsstrangs 24 schmiert, unter anderem das obere Zahnrad 30.

Das Getriebegehäuse 18 ist seitlich neben dem Ölsumpf 34 mit einer über den Ölsumpfpegel 36 hinaus ragenden Trennwand 38 ausgebildet. Die Trennwand 38 ist an ihren Enden (nicht dargestellt) mit der benachbarten Seitenwand des Getriebegehäuses 18 verbunden. Hierdurch wird ein nach oben hin offener Behälter 40 gebildet, der als ein Ölreservoir ausgebildet ist.

Die obere Öffnung des Behälters 40 ist bei 46 dargestellt. Über die Öffnung 46 kann Spritzöl 42 in den Behälter 40 gelangen, wie es schematisch bei 44 gezeigt ist.

Bei der vorliegenden Ausführungsform liegt der maximale Ölpegel 48 des Behälters auf der Höhe der Oberkante der Trennwand 38. Bei 50 ist schematisch gezeigt, dass Öl, das aus dem Behälter 40 überläuft, in den Ölsumpf 34 gelangt.

An dem Getriebegehäuse 18 ist eine in einer Hydraulikeinheit 52 zusammengefasste Hydraulikanordnung festgelegt. Im vorliegenden Fall ist die Hydraulikeinheit 52 benachbart zu jener Seitenwand des Getriebegehäuses festgelegt, die benachbart ist zu dem Behälter 40.

Die Hydraulikeinheit 52 weist ein Hydraulikgehäuse 54 auf, das von außen an das Getriebegehäuse 18 angeflanscht ist.

In dem Hydraulikgehäuse 54 sind angeordnet eine Pumpe 56 und eine Ventilanordnung 58. Außen an dem Hydraulikgehäuse 54 ist eine schematisch angedeutete elektronische Steuereinrichtung 60 festgelegt. Die elektronische Steuereinrichtung 60 ist mit der Ventilanordnung 58 und der Pumpe 56 verbunden und steuert deren Betrieb, wie es schematisch bei 64 bzw. 62 gezeigt ist.

Die Pumpe 56 ist über eine Versorgungsöffnung 66 in dem Getriebegehäuse 18 mit dem Behälter 40 verbunden. Die Versorgungsöffnung 66 ist im Bereich des Bodens des Behälters 40 vorgesehen.

Die Pumpe 56 versorgt die Ventilanordnung 58 mit unter Druck stehendem Öl. Die Ventilanordnung 58 ist über eine Hydraulikleitung 68 mit einem Stellglied 70 verbunden, das ebenfalls außen an dem Getriebegehäuse 18 festgelegt ist, und zwar benachbart zu der Anordnung eines Schaltgliedes 72 innerhalb des Getriebegehäuses 18.

Das Stellglied 70 ist dazu ausgelegt, das Schaltglied 72 zu betätigen. Das Stellglied 70 kann beispielsweise durch eine Kolben-/Zylinderanordnung oder eine Mehrzahl derartiger Anordnungen gebildet sein. Das Schaltglied 72 kann beispielsweise eine Schaltwelle sein, die durch Schaltbewegungen Radsätze des Kraftübertragungsstrangs 24 in Eingriff bzw. außer Eingriff bringt, und durch Wählbewegungen verschiedene Radsätze des Kraftübertragungsstrangs 24 anwählt.

Bei 70' ist gezeigt, dass das Stellglied in gleicher Weise innerhalb des Hydraulikgehäuses 54 angeordnet sein kann, um das Schaltglied 72 zu betätigen.

Ferner versteht sich, dass zwischen der Pumpe 56 und der Ventilanordnung 58 ein Druckbehälter vorgesehen sein kann, um im Bedarfsfall einen hinreichend hohen Volumenstrom an unter Druck stehendem Öl für die Ventilanordnung 58 und das Stellglied 70 bereitstellen zu können.

Bei 74 ist in schematischer Weise gezeigt, dass Tanköl aus der Ventilanordnung 58 über eine Rückführöffnung 76 in dem Getriebegehäuse 18 in den Behälter 40 zurück geführt wird.

Im Betrieb wird zum automatisierten bzw. zum automatischen Durchführen eines Wechsels eines Übersetzungsverhältnisses des Kraftübertragungsstrangs 24 die Steuereinrichtung 60 geeignete Signale an die Ventilanordnung 58 (und gegebenenfalls an die Pumpe 56, wenn kein Druckbehälter vorgesehen ist) bereitstellen. Demzufolge wird das Stellglied 70 mit Hydrauliköl aus dem Behälter 40 beaufschlagt, um das Schaltglied 72 so zu betätigen, dass ein anderes Übersetzungsverhältnis eingestellt wird.

Rückfließendes Tanköl aus der Ventilanordnung 58 gelangt zurück in den Behälter 40.

Hierdurch wird ein im Grunde geschlossener Kreislauf eingerichtet. Da im Regelfall nicht von einem Verlust an Öl innerhalb der Hydraulikanordnung 52 zu rechnen ist, sollte die Ölmenge innerhalb der Hydraulikanordnung 52 generell konstant bleiben. Je nach Füllstand eines Druckspeichers (sofern vorgesehen) ist der Stand im Behälter mal höher, mal tiefer. Aber die gesamte Ölmenge bleibt dennoch konstant.

Zusätzlich ist im vorliegenden Fall vorgesehen, dass der Behälter 40 durch Spritzöl 42, 44 gefüllt wird, um Verluste aus dem Behälter 40 durch Überschwappen auszugleichen, wie es bei starken Beschleunigungsvorgängen und/oder Bergfahrten erfolgen kann.

Durch diese Maßnahmen ist insgesamt gewährleistet, dass die Pumpe 56 über die im unteren Bereich des Behälters 40 liegende Versorgungsöffnung 66 jederzeit mit Öl versorgt wird.

Durch die seitliche Anordnung des Behälters 40 neben dem Ölsumpf 34 ergibt sich keine Einschränkung der Bodenfreiheit, wie es beispielsweise bei einem Ölreservoir am Boden des Getriebegehäuses 18 der Fall wäre. Ferner muss kein zusätzlicher Aufwand für eine Ölwanne getrieben werden, damit die Ölpumpe in jeder Situation ansaugen kann. Des Weiteren wird das Öl im separaten Behälter nicht durch die eintauchenden Zahnräder verschäumt und mit Luft angereichert, welche sich im Steuer- und Regelverhalten des Hydrauliksystems 52 negativ bemerkbar machen würde.

Der Behälter 40 kann innerhalb des Getriebegehäuses 18 seitlich neben dem Ölsumpf 34 an beliebiger Stelle angeordnet sein, auch teilweise oder vollständig oberhalb des Ölpegels 36 des Ölsumpfes 34, wie es in Fig. 1 dargestellt ist. Es ergeben sich sogar Vorteile beim Ansaugen durch die Pumpe, wenn der Ölstand höher als der Saugkanal der Pumpe ist.

Ferner ist die Lage des Behälters 40 in axialer Richtung beliebig. Der Behälter 40 kann folglich vorne oder hinten am Getriebegehäuse 18 vorgesehen werden.

Dadurch, dass das zum Schmieren des Kraftübertragungsstrangs 24 und zum Versorgen der Hydraulikanordnung 52 dasselbe Öl verwendet wird, vereinfachen sich Kontrolle und Nachfüllen im Vergleich zu Lösungen des Standes der Technik, bei denen Hydrauliköl und Schmieröl strikt voneinander getrennt waren.

Durch die Anordnung der Hydraulikanordnung 52 innerhalb des Hydraulikgehäuses 54 kann die Hydraulikanordnung 52 zu großen Teilen vormontiert werden. So ergibt sich ein einfacher Endmontagevorgang.

Obgleich dies nicht dargestellt ist, könnte der Behälter 40 auch geschlossen sein, in dem Sinn, dass Spritzöl 42 nicht in den Behälter 40 gelangt. Es versteht sich, dass dennoch eine Ventilöffnung in dem geschlossenen Behälter 40 vorhanden sein sollte, um bei Ansaugvorgängen durch die Pumpe 56 keinen Unterdruck in dem Behälter 40 zu erzeugen.

Weiter wäre Voraussetzung für einen geschlossenen Behälter, dass das zurückgeführte Tanköl 74 in den geschlossenen Behälter 40 gefüllt wird. Damit würde sich ein geschlossener Kreis ergeben. In diesem Falle könnten auch unterschiedliche Medien für Getriebe bzw. Hydraulik verwendet werden.

Der seitlich neben dem Ölsumpf 34 angeordnete Behälter 40 ist als Ölreservoir anzusehen, also geeignet zur dauerhaften Aufnahme von Öl.

Ferner versteht sich, dass anstelle eines Schaltgliedes 72 in Form einer Schaltwelle auch andere Arten von Schaltgliedern hydraulisch betätigbar sind, beispielsweise einzelne Schaltmuffen, eine Mehrzahl von Schaltstangen oder ähnliches.

Generell ist auch denkbar, dass die Hydraulikanordnung 52 weitgehend innerhalb des Getriebegehäuses 18 angeordnet ist.

Für den Fall des Antriebs der Pumpe 56 durch einen Elektromotor ist es jedoch bevorzugt, wenn zumindest der Elektromotor außen angeflanscht ist. Bei dem Getriebe 16 der Fig. 1 ist ein Elektromotor zum Antreiben der Pumpe 56 außen an dem Hydraulikgehäuse 54 angeflanscht.

Auch ein Druckbehälter, wie oben erwähnt, könnte außerhalb des Hydraulikgehäuses 54 angeordnet sein.

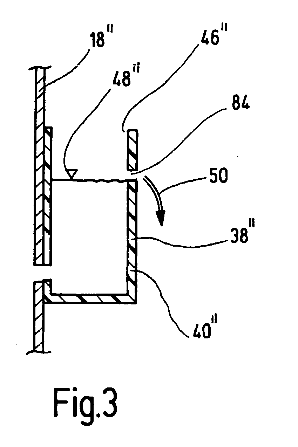

Die Fig. 2 und 3 zeigen Modifikationen des Getriebes der Fig. 1. Die generelle Funktionsweise und der generelle Aufbau entsprechen dem des Getriebes 16 der Fig. 1. Im Folgenden wird daher nur auf die Unterschiede eingegangen.

Bei der erfindungsgemäßen Ausführungsform der Fig. 2 weist das Getriebegehäuse 18' seitlich benachbart zu dem Behälter 40' eine Gehäuseöffnung 82 auf. Das Hydraulikgehäuse 54' ist mit einer Abdeckung 80 versehen, die dazu ausgelegt ist, die Gehäuseöffnung 82 zu verschließen.

Bei dieser Ausführungsform wird der Behälter 40' demzufolge durch die Trennwand 38 und durch die Abdeckung 80 gebildet.

Ferner sind die Versorgungsöffnung 66' und die Rückführöffnung 76' an dem Hydraulikgehäuse 54' ausgebildet.

Hierdurch wird die Endmontage des Getriebes nochmals vereinfacht. Die Hydraulikanordnung 52 kann vollständig vormontiert werden.

Das Hydraulikgehäuse 54, 54' besteht vorzugsweise aus einem Leichtmetall, wie Aluminium. Es kann jedoch auch aus Kunststoff, Stahl oder als Verbundbauteil ausgebildet sein.

Bei der Ausführungsform der Fig. 3 ist der Behälter 40" als ein separater Behälter ausgebildet. Der Behälter 40" kann beispielsweise aus Leichtmetall, wie Aluminium, hergestellt sein, kann jedoch auch aus Kunststoff oder Stahl bestehen.

In der Darstellung der Fig. 3 ist der Behälter 40" an einer Wand des Getriebegehäuses 18" festgelegt. Es versteht sich jedoch, dass der Behälter 40" auch an einer Abdeckung 80 des Hydraulikgehäuses 54' angebracht sein kann.

In Fig. 3 ist ferner gezeigt, dass die Trennwand 38" hoch ausgebildet ist und dass die Trennwand 38" eine seitliche Überlauföffnung 84 hin zu dem Ölsumpf 34 aufweist. Durch die Anordnung der Überlauföffnung 84 wird der maximale Pegel 48" in dem Behälter 40" definiert. Sofern die Überlauföffnung 84 deutlich unterhalb der Oberkante der Trennwand 38" angeordnet ist, kann vermieden werden, dass Öl aus dem Behälter 40" über die Trennwand 38" überschwappt, wenn starke Beschleunigungen oder Bergfahrten erfolgen.

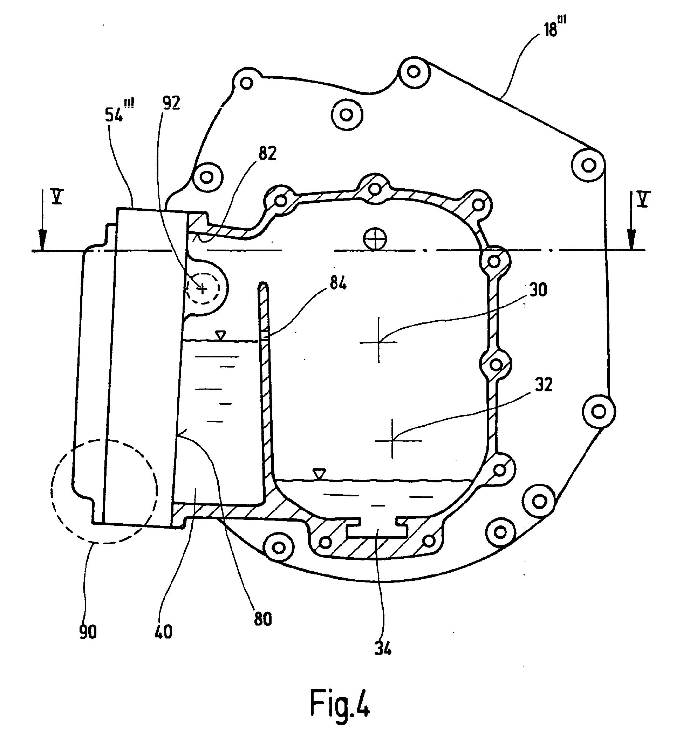

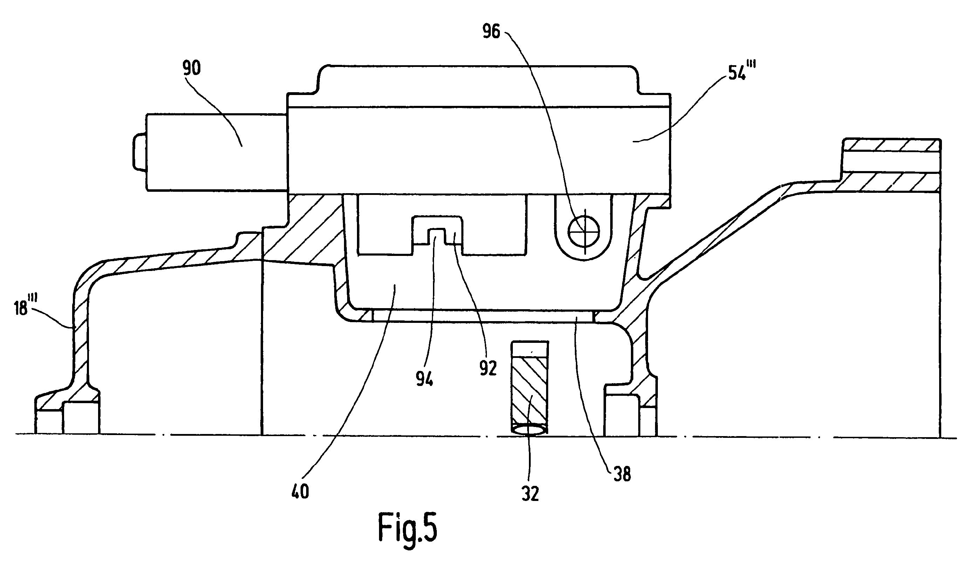

In den Fig. 4 und 5 ist eine weitere Ausführungsform des erfindungsgemäßen Getriebes dargestellt.

Der generelle Aufbau und die generelle Funktionsweise entsprechen dem Getriebe 16 der Fig. 1 mit der Modifikation der Fig. 2 und der Überlauföffnung 84 der Fig. 3. Im Folgenden wird daher nur auf die Unterschiede zu der zuvor diskutierten Ausführungsform eingegangen.

Erkennbar ist das Hydraulikgehäuse 54"' als eine kompakte Einheit ausgebildet, die vormontiert außen an dem Getriebegehäuse im Bereich der Gehäuseöffnung 82 dichtend angeflanscht werden kann.

In Fig. 5 ist zu erkennen, dass ein Elektromotor 90 zum Antreiben der Pumpe 56 außen an dem Hydraulikgehäuse 54''' angeflanscht ist.

Ferner ist zu erkennen, dass zwei Stellglieder 92, 96 an der Innenseite der Abdeckung 80 angeordnet sind, so dass sie generell oberhalb des Behälters 40 liegen. Das eine Stellglied 92 ist als Kolben-/Zylinderanordnung ausgebildet und weist eine Ausnehmung 94 im Kolben auf. Das Stellglied 92 ist generell in Axialrichtung des Getriebes 16 ausgerichtet und dient dazu, mittels der Ausnehmung 94 eine Schaltwelle 72 in axialer Richtung zu bewegen.

Das zweite Stellglied 96 ist im vorliegenden Fall quer zu dem ersten Stellglied 92 angeordnet und dient über nicht näher bezeichnete Mittel dazu, die Schaltwelle 72 zu drehen.

Die Anordnung der Stellglieder 92, 96 ist jedoch lediglich beispielhaft zu verstehen. Von besonderem Vorteil ist bei dieser Ausführungsform, dass die Stellglieder 92, 96 im Innenraum des Getriebegehäuses 18"' angeordnet sind. Demzufolge können die Stellglieder 92, 96 durch vergleichsweise kostengünstige Kolben-/Zylinderanordnungen oder sonstige hydraulische Schaltglieder gebildet sein, die nur geringe Anforderungen hinsichtlich der Dichtigkeit aufweisen. Denn sofern Öl aus den Stellgliedern 92, 96 leckt, gelangt dies ohne Umweg direkt in den Innenraum des Getriebegehäuses 18'''. Genauer gesagt gelangt solches Leckageöl in den Behälter 40, so dass ein geschlossener Kreislauf des Öls für die Hydraulikanordnung 52 eingerichtet ist.

Ein Druckspeicher für die Hydraulikanordnung 52 kann innerhalb des Hydraulikgehäuses 54''' angeordnet sein. Vorzugsweise ist ein solcher Druckspeicher jedoch außen an dem Hydraulikgehäuse 54''' angeflanscht, in ähnlicher Weise wie der Elektromotor 90.

Generell ist auch denkbar, die Ventilanordnung 58 innerhalb des Hydraulikgehäuses 54''' so anzuordnen, dass kleine Leckagen hieraus über eine geeignete Öffnung in den Behälter 40 gelangen. Durch diese Maßnahme können weitere Kosten eingespart werden, da eine kostengünstigere Ventilanordnung verwendet werden kann.

Bei der Ausführungsform der Fig. 4 und 5 ist ebenfalls von besonderer Bedeutung, dass außerhalb des Hydraulikgehäuses 54''' keine Hydraulikleitungen oder ähnliches zu verlegen sind.

Demzufolge ergibt sich eine vollintegrierte Lösung mit optimaler Montage und geringen Kosten.

## Patentansprüche

1. Automatisiertes Getriebe (16) für Kraftfahrzeuge, insbesondere in Form eines Vorgelegegetriebes (16), mit
- einem Getriebegehäuse (18; 18"),
- wenigstens einem Kraftübertragungsstrang (24) zum Einrichten unterschiedlicher Übersetzungsverhältnisse, der dazu ausgelegt ist, Kraft von einem Getriebeeingang (20) zu einem Getriebeausgang (22) zu übertragen, wobei Kraftübertragungsglieder (30, 32) aus einem Ölsumpf (34) am Boden des Getriebegehäuses (18'; 18"') geschmiert werden, und
- einer Hydraulikanordnung (52), die wenigstens eine Pumpe (56) und eine Ventilanordnung (58) aufweist und dazu ausgelegt ist, Schaltglieder (72) zum Ändern des Übersetzungsverhältnisses des Kraftübertragungsstrangs (24) automatisiert zu betätigen,
wobei innerhalb des Getriebegehäuses (18'; 18'") seitlich neben dem Ölsumpf (34) ein Behälter (40'; 40) angeordnet ist, der als ein Ölreservoir für die Hydraulikanordnung (52) dient, und wobei der Behälter (40'; 40) durch das Getriebegehäuse (18'; 18'") und durch eine von außen an dem Getriebegehäuse (18'; 18'") angebrachte Abdeckung (80) gebildet ist,
**dadurch gekennzeichnet, dass** der Behälter (40'; 40) nach oben hin geöffnet ist und über die obere Öffnung (46) mit Spritzöl (42, 44) füllbar ist, und dass das Getriebegehäuse (18'; 18"') eine neben dem Ölsumpf (34) angeordnete, hochstehende Trennwand (38) aufweist, hinter der an dem Getriebegehäuse (18'; 18"') eine Gehäuseöffnung (82) ausgebildet ist, die von der Abdeckung (80) verschlossen ist.

2. Automatisiertes Getriebe nach Anspruch 1, **dadurch gekennzeichnet, dass** die Abdeckung (80) Teil eines Hydraulikgehäuses (54') ist, in dem die Hydraulikanordnung (52) angeordnet ist und das von außen an dem Getriebegehäuse (18') festgelegt ist.

3. Automatisiertes Getriebe nach einem der Ansprüche 1 bis 2, **dadurch gekennzeichnet, dass** die Hydraulikanordnung (52) außerhalb des Getriebegehäuses (18') angeordnet ist und der Hydraulikanordnung (52) Öl aus dem Behälter (40') über eine Versorgungsöffnung (66') zuführbar ist.

4. Automatisiertes Getriebe nach Anspruch 3, **dadurch gekennzeichnet, dass** die Hydraulikanordnung (52) in einem Hydraulikgehäuse (54') angeordnet ist, das von außen an dem Getriebegehäuse (18') festgelegt ist.

5. Automatisiertes Getriebe nach Anspruch 4, **dadurch gekennzeichnet, dass** ein Elektromotor zum Antreiben der Pumpe (56) der Hydraulikanordnung (52) außen an dem Hydraulikgehäuse (54') festgelegt ist.

6. Automatisiertes Getriebe nach einem der Ansprüche 3 bis 5, **dadurch gekennzeichnet, dass** Öl (74) von der Hydraulikanordnung (52) über wenigstens eine Rückführöffnung (76') zurück in das Getriebegehäuse (18') geführt wird.

7. Automatisiertes Getriebe nach Anspruch 6, **dadurch gekennzeichnet, dass** die Rückführöffnung (76') so angeordnet ist, dass das in das Getriebegehäuse (18') zurückgeführte Öl (74) in den Behälter (40') gefüllt wird.

8. Automatisiertes Getriebe nach einem der Ansprüche 1 bis 7, **dadurch gekennzeichnet, dass** der Behälter (40'; 40) eine Überlauföffnung (46; 84) ausweist, die auf der Höhe des maximalen Füllpegels (48) des Behälters (40'; 40) liegt und über die überlaufendes Öl (50) dem Ölsumpf (34) zugeführt wird.

9. Automatisiertes Getriebe nach einem der Ansprüche 1 bis 8, **dadurch gekennzeichnet, dass** die Hydraulikanordnung (52) wenigstens ein Stellglied (92, 96) aufweist, das innerhalb des Getriebegehäuses (18''') angeordnet ist.

10. Automatisiertes Getriebe nach Anspruch 2 und nach Anspruch 9, **dadurch gekennzeichnet, dass** das Stellglied (92, 96) an einem zum Getriebegehäuse (18''') weisenden Teil des Hydraulikgehäuses (54''') festgelegt ist.

## Claims

1. Automated transmission (16) for motor vehicles, particularly in the form of a lay shaft transmission (16), comprising
- a transmission housing (18'; 18"'),
- at least one power transmission line (24) for establishing different transmission ratios, wherein the power transmission line is adapted to transmit power from a transmission input (20) to a transmission output (22), wherein power transmission elements (30, 32) are lubricated out of an oil sump (34) at a bottom of the transmission housing (18'; 18"'), and
- a hydraulic arrangement (52) which comprises at least a pump (56) and a valve arrangement (58), wherein the hydraulic arrangement (52) is adapted to automatically actuate shift elements (72) for changing the transmission ratio of the power transmission line (24),
wherein a container (40'; 40) is arranged within the transmission housing (18'; 18"') laterally adjacent to the oil sump (34), wherein the container (40'; 40) serves as a oil reservoir for the hydraulic arrangement (52), and wherein the container (40'; 40) is formed by the transmission housing (18'; 18"') and by a cover (80) attached from the outside to the transmission housing (18'; 18"),
**characterized in that** the container (40'; 40) is open at its upper side and **in that** splashing oil (42; 44) can be filled into the container via the upper opening (46), and **in that** the transmission housing (18'; 18"') comprises an erected separating wall (38) arranged adjacent to the oil sump (34), wherein a housing opening (82) is provided in the transmission housing (18'; 18"') behind the separating wall (38), wherein the housing opening (82) is closed by the cover (80).

2. Automated transmission according to claim 1, **characterized in that** the cover (80) is part of a hydraulic housing (54'), wherein the hydraulic arrangement (52) is arranged within the hydraulic housing (54') and wherein the hydraulic housing (54') is secured to the transmission housing (18') from the outside.

3. Automated transmission according to any of claims 1 to 2, **characterized in that** the hydraulic arrangement (52) is arranged outside the transmission housing (18'), and wherein oil can be supplied from the container (40') to the hydraulic arrangement (52) via a supply opening (66').

4. Automated transmission according to claim 3, **characterized in that** the hydraulic arrangement (52) is arranged within a hydraulic housing (54'), the hydraulic housing (54') being secured to the transmission housing (18') from the outside.

5. Automated transmission according to claim 4, **characterized in that** an electric motor for driving the pump (56) of the hydraulic arrangement (52) is secured to the outside of the hydraulic housing (54').

6. Automated transmission according to any of claims 3 to 5, **characterized in that** oil (74) can be fed from the hydraulic arrangement (52) back into the transmission housing (18') via at least one fed back opening (76').

7. Automated transmission according to claim 6, **characterized in that** the fed back opening (76') is arranged such that the oil (74) fed back into the transmission housing (18') is filled into the container (40').

8. Automated transmission according to any of claims 1 to 7, **characterized in that** the container (40'; 40) comprises an overflow opening (46; 84), wherein the overflow opening (46; 84) is arranged at the height of the maximum filling level (48) of the container (40'; 40) and wherein oil (50) flowing over the overflow opening (46; 84) is supplied to the oil sump (34).

9. Automated transmission according to any of claims 1 to 8, **characterized in that** the hydraulic arrangement (52) comprises at least one actuating element (92, 96) which is arranged within the transmission housing (18"').

10. Automated transmission according to claim 2 and according to claim 9, **characterized in that** the actuating element (92, 96) is secured to a part of the hydraulic housing (54"'), which faces to the transmission housing (18"').

## Revendications

1. Boîte de vitesses automatisée pour véhicules automobiles, en particulier sous la forme d'une boîte de vitesses à renvoi (16), comprenant
- un carter de boîte de vitesses (18' ; 18"'),
- au moins une chaîne de transmission de force (24) pour régler différents rapports de transmission, qui est conçue ou prévue pour transmettre une force d'une entrée de boîte de vitesses (20) à une sortie de boîte de vitesses (22), des organes de transmission de force (30, 32) étant lubrifiés à partir d'un carter d'huile (34) situé au fond du carter de boîte de vitesses (18' ; 18"') et
- un agencement hydraulique (52) qui comporte au moins une pompe (56) et un agencement de vannes (58) et qui est conçu ou prévu pour actionner de manière automatisée des organes de changement de vitesse (72) servant à changer le rapport de transmission de la chaîne de transmission de force (24),
un réservoir ou récipient (40', 40) qui sert de réservoir d'huile pour l'agencement hydraulique (52) étant disposé à l'intérieur du carter de boîte de vitesses (18' ; 18"') latéralement près du carter d'huile (34), le réservoir (40', 40) étant formé par le carter de boîte de vitesses (18' ; 18"') et par un couvercle (80) appliqué par l'extérieur contre le carter de boîte de vitesses (18' ; 18"'),
**caractérisée en ce que** le réservoir (40', 40) est ouvert vers le haut et peut être rempli d'huile de barbotage (42, 44) par l'ouverture supérieure (46), et que le carter de boîte de vitesses (18' ; 18"') comporte une paroi de séparation (38) verticale, disposée à côté du carter d'huile (34), derrière laquelle une ouverture de carter (82), qui est fermée par le couvercle (80), est réalisée sur le carter de boîte de vitesses (18' ; 18"').

2. Boîte de vitesses automatisée selon la revendication 1, **caractérisée en ce que** le couvercle (80) fait partie d'un carter hydraulique (54') dans lequel l'agencement hydraulique (52) est disposé et qui est fixé par l'extérieur sur le carter de boîte de vitesses (18').

3. Boîte de vitesses automatisée selon l'une des revendications 1 à 2, **caractérisée en ce que** l'agencement hydraulique (52) est disposé à l'extérieur du carter de boîte de vitesses (18') et que de l'huile provenant du réservoir (40') peut être amenée à l'agencement hydraulique (52) par une ouverture d'alimentation (66').

4. Boîte de vitesses automatisée selon la revendication 3, **caractérisée en ce que** l'agencement hydraulique (52) est disposé dans un carter hydraulique (54') qui est fixé par l'extérieur sur le carter de boîte de vitesses (18').

5. Boîte de vitesses automatisée selon la revendication 4, **caractérisée en ce qu'**un moteur électrique pour entraîner la pompe (56) de l'agencement hydraulique (52) est fixé extérieurement sur le carter hydraulique (54').

6. Boîte de vitesses automatisée selon l'une des revendications 3 à 5, **caractérisée en ce que** de l'huile (74) de l'agencement hydraulique (52) est ramenée dans le carter de boîte de vitesses (18') par au moins une ouverture de retour (76').

7. Boîte de vitesses automatisée selon la revendication 6, **caractérisée en ce que** l'ouverture de retour (76') est disposée de façon que l'huile (74) ramenée dans le carter de boîte de vitesses (18') soit versée dans le réservoir (40).

8. Boîte de vitesses automatisée selon l'une des revendications 1 à 7, **caractérisée en ce que** le réservoir (40' ; 40) comporte une ouverture de trop-plein (46 ; 84) qui se trouve à hauteur du niveau de remplissage maximal (48) du réservoir (40' ; 40) et par laquelle l'huile débordante (50) est amenée au carter d'huile (34).

9. Boîte de vitesses automatisée selon l'une des revendications 1 à 8, **caractérisée en ce que** l'agencement hydraulique (52) comporte au moins un actionneur (92, 96) qui est disposé à l'intérieur du carter de boîte de vitesses (18"').

10. Boîte de vitesses automatisée selon la revendication 2 et selon la revendication 9, **caractérisée en ce que** l'actionneur (92, 96) est fixé sur une partie du carter hydraulique (54"') dirigée vers le carter de boîte de vitesses (18'").
